# EUROPEAN PATENT APPLICATION

(11) **EP 1 665 926 A2**
(43) Date of publication of application: **07.06.2006**
(21) Application number: 05257398.7
(22) Date of filing: 01.12.2005
(51) Int. Cl.: A01K 1/06, A61D 3/00, A01K 15/00

(54) **Animal restraining device**

(30) Priority: 02.12.2004 GB 0426379
(71) Applicant: Holloway, Michael, Shrewsbury Shropshire SY5 9EA (GB)
(72) Inventor: Holloway, Michael, Shrewsbury Shropshire SY5 9EA (GB)
(74) Representative: Badger, John Raymond

(57) **Abstract**

An animal restraining device 10 in the form of an enclosure 11 for receiving an animal and comprising a rigid frame 13 having a closure member 23 moveable to allow an animal to enter the enclosure and be restrained from exiting, a head restraint 24 moveable to allow the head of an animal to pass therethrough and to define a smaller opening through which the head cannot extend, animal support means 26 to support the animal when the enclosure is elevated, said enclosure being tiltable relative to an enclosure support, and hydraulic actuators 25,29,37,41 for controlling at least one of the head restraint 24, closure member 23 and support means 26, an hydraulic manifold assembly 50 to receive signals to control the manifold assembly, and a remote control unit 53 operable to communicate remotely with said manifold assembly to control operation of an hydraulic actuator.

## Description

This invention relates to an animal restraining device of the type comprising an enclosure in which an animal may be retained and which enables at least a part of the animal to be held relatively securely whilst a required procedure is undertaken on a part of that animal.

The invention relates in particular, though not exclusively, to an animal restraining device of a type which is readily transportable for use at different locations.

One commonly utilised form of animal restraining device is a so-called cattle crush which is transportable on a vehicle or a trailer attached to a vehicle. In one known type of cattle crush pivot means is provided to enable the cattle crush to be hingedly supported relative to a trailer whereby it may be pivoted between a first, upright position at which an animal can be enticed into the enclosure, and a second position at which the animal is supported either inclined or substantially horizontally for the purpose of being subjected to the required procedure, for example foot trimming.

Conventionally a cattle crush has associated therewith a plurality of mechanical levers and other such controls for enabling the cattle crush to be moved between the first and second positions and for enabling an animal to be safely restrained in the crush. The arrangement of the controls and the need to effect operation of control devices located at different parts of the crush imposes particular demands on the operator to ensure that concurrent with controlling an animal and enticing it into the crush, moveable components of the crush are safely operated in a timely manner without undue risk of injury to the animal, or to the operator. Often the operator may find that it is difficult simultaneously to have a good view of and control over an animal whilst simultaneously effecting control of the moveable parts of the crush.

The present invention seeks to provide a livestock restraining device which is easier and safer to use than hitherto known animal restraining devices.

In accordance with one aspect of the present invention there is provided an animal restraining device comprising an enclosure for receiving an animal, said enclosure comprising a substantially rigid frame comprising a pair of ends at least one of which comprises a closure member moveable between open and closed positions thereby respectively to allow an animal to enter the enclosure and to be restrained from exiting from the enclosure, and at least one end comprising a head restraint moveable between a first position at which it defines an opening which is sufficient to allow the head of an animal to pass therethrough and a second position at which it defines a smaller opening through which the neck but not the head of that animal may extend, the enclosure further comprising animal support means operable to engage with the underside of the animal and support the animal when the enclosure is elevated, said animal restraining device further comprising an enclosure support for supporting the enclosure and the enclosure being mounted in a manner in which it is tiltable relative to the enclosure support for movement of the enclosure from a substantially vertical position to an inclined or horizontal position, and the animal restraining device comprising hydraulic actuators for controlling said tilting movement and operation of at least one of the head restraint, closure member and support means, an hydraulic fluid manifold assembly having associated therewith an input for receiving control signals to control operation of the manifold assembly, and the animal restraining device further comprising a remote control unit operable at a position remote from the manifold assembly to control operation of at least one of said hydraulic actuators.

The enclosure support may be a transporter such as a trailer by means of which the enclosure may be transported for use at different locations. The hydraulic fluid manifold assembly may be located on the transporter.

The enclosure may comprise a single closure member and the head restraint may be constructed as part of that closure member.

Alternatively the animal restraining device may comprise two closure members provided at respective end regions of the enclosure and each moveable, optionally by an hydraulic actuator, between open and closed positions, one or both of said closure members having a said head restraint associated therewith.

The closure member may be movable manually, as opposed to hydraulically, between open and closed positions and a locking device, such as a spring loaded latch, may be provided to enable the closure member to be retained in a closed position. However it may be further provided that hydraulically controlled operation of the head restraint to move it to an open position may simultaneously release the locking device.

Although the enclosure may be generally of an open frame type construction formed, for example, from welded metal tube, one of the sides of the enclosure (as considered when the enclosure is in a normal, upright orientation) preferably comprises a substantially planar support surface by which the weight of an animal body may be supported when the enclosure is tilted to place said side in an inclined or horizontal position. Preferably said substantially planar support surface is provided also at a position beyond that end of the enclosure having the head restraint thereby to provide support for the head of an animal when the enclosure is tilted.

The remote control unit may communicate with the input of the hydraulic fluid manifold assembly by means of a suitably robust physical connection. Examples of potentially suitable connections are an electrical cable, an optical link, a pneumatic or hydraulic conduit, or a mechanical inter-link such as a bowden cable. Preferably, however, the communication is of a wireless type which does not require any physical connection, for example by means of an infra-red, ultrasonic or radio frequency link.

The remote control unit may be a portable wireless type hand-held control unit.

The hand control unit may comprise channel selector pads 54 for selecting a particular hydraulic actuator for operation, and movement control pads 55 to cause that selected hydraulic actuator to extend or contract in length.

It is further taught by the present invention that an interlock device is provided to prevent movement of the support means to a support position unless, for example, the or each closure member is in a closed position, or, for example, until the head restraint is in a head restraining position.

Conversely, the interlock may inhibit operation of a closure member to an open position until the support means has moved to a retracted position at which it does not support the animal and, optionally, until the head restraint is in an open position to allow the head of the animal to move freely therethrough.

The interlock may inhibit tilting movement of the enclosure relative to a transporter from an initial, upright position until at least the support means is in a supporting position. The enclosure may be tiltable about a pivot axis fixed relative to a transporter. The interlock may be an electronic type interlock means via which operation of the hydraulic manifold assembly may be controlled.

The hydraulic fluid manifold assembly may derive a source of pressurised hydraulic fluid from a hydraulic pump which may also be located on a transporter, such as a trailer, and which may be powered either by a battery carried by the trailer, or by electrical power derived from a vehicle by means of which the transporter is towable. Alternatively, if the trailer is connectable to a towing vehicle of a kind which comprises means for generating pressurised hydraulic fluid, the hydraulic fluid manifold assembly may be connectable to said supply.

One embodiment of the present invention will now be described, by way of example only, with reference to the accompanying diagrammatic drawings in which:-
Figure 1 is a perspective view of an animal restraining device in accordance with the present invention;

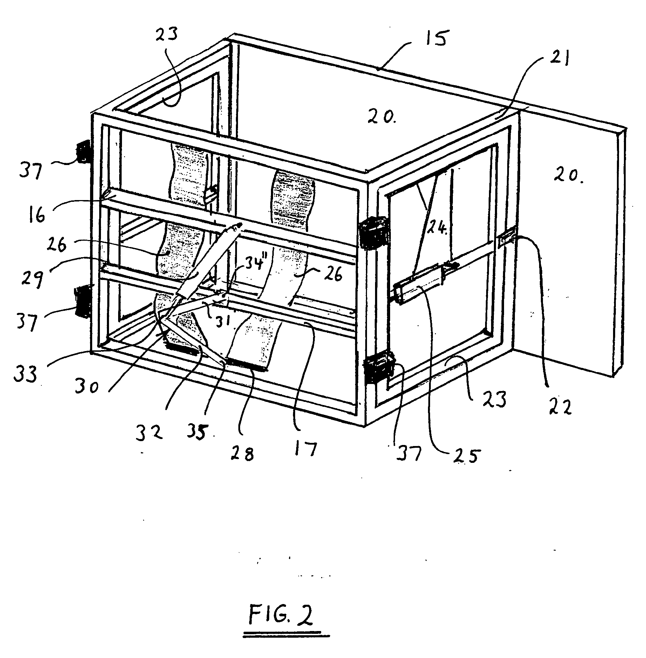

Figure 2 is a perspective view of the enclosure shown in Figure 1;
Figure 3 is an end view of the enclosure, and
Figure 4 is a side view of the enclosure.

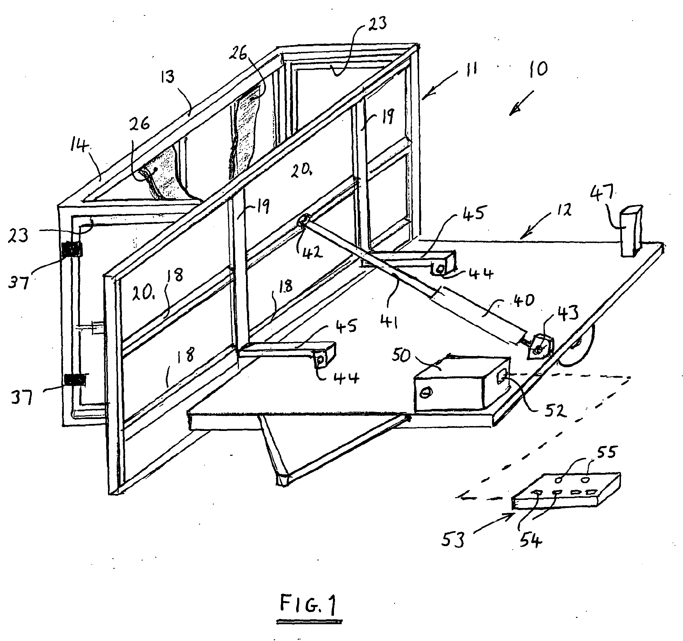

The animal restraining device 10 comprises a trailer 12 relative to which an animal enclosure 11 in the form of a cattle crush is pivotally secured so as to be moveable between an upright position, as shown in Figure 1, and a tilted or horizontal position in which the enclosure 11 lies over at least a part of the trailer 12.

The enclosure 11 comprises a welded assembly 13 of metal tubes which define a box-like shape sized sufficient to receive animals of the type which it is intended to restrain.

One side 14 of the enclosure comprises a plurality of intermediate tubes 16, 17 which extend horizontally and vertically and ensure that an animal cannot escape through that side 14. The other side 15 comprises a substantially similar framework including intermediate horizontal and vertical tubes 18, 19 and also a plurality of metal plates 20 secured to the frame, at the side of the frame lying inwards of the enclosure thereby to provide a substantially smooth surface for supporting an animal when the enclosure is tilted from the vertical position. The support plates 20 extend beyond one of the ends 21 of the enclosure thereby in use to provide a head support.

Each end of the enclosure 11 is provided with a door 23 which is pivotally mounted relative to a vertical side 14 of the frame, each door being pivotable outwards from the enclosure. Each door is mounted on hinges 37 which may be hydraulically controlled, or manually as in this embodiment. Optionally only one door may be provided. A spring loaded latch 22 is provided for enabling each door to be retained in a closed position.

Each door 23 also comprises a head restraint 24 of a kind known per se for use in a cattle crush. The head restraint in this embodiment of the invention is operable by means of a hydraulic cylinder 25, mechanical stop means (not shown) being provided to limit the distance to which the opening provided by the restraint means may be reduced or extended. The head restraint mechanism is inter-linked with the latch 22 such that when the head restraint is moved hydraulically from a closed to an open position the latch is simultaneously released to allow the door to open.

The open side 14 of the enclosure frame has secured thereto a pair of flexible support straps 26 each secured at one end to an upper region 27 of the frame side. The lower end of each strap is secured to a bar 28 which can be moved from a first position at which it is substantially aligned with the plane of the open side 14 of the frame to a second position at which it lies close to the other side 15 of the frame. In that second position the straps 26 lie extended underneath the animal to provide support for the animal at such time as the enclosure is elevated by tilting movement.

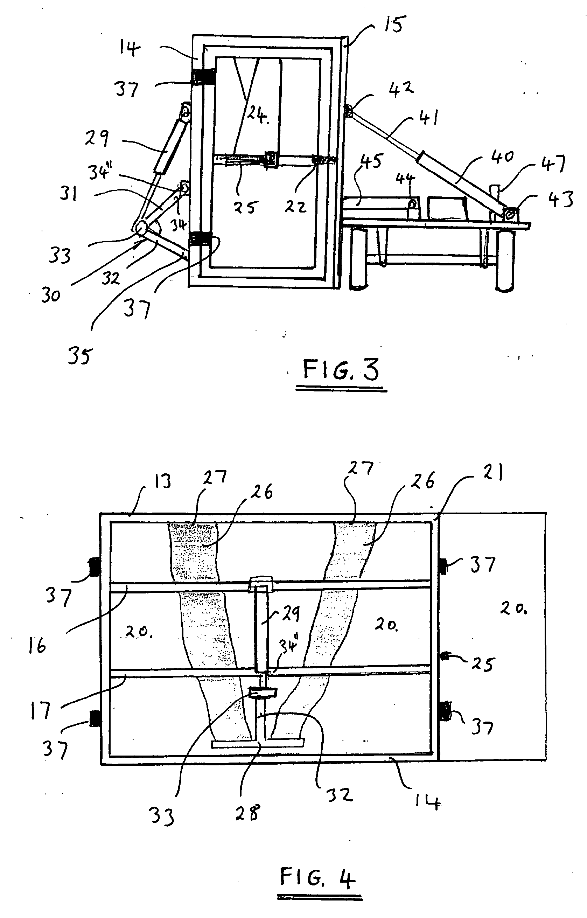

The bar 28 is moveable by an actuator 29 which extends between the frame, to which it is pivoted, and a hinged arm 30 which, as considered in cross-section as viewed in Figure 3, is in the form of two limb portions 31, 32 which lie at right angles relative to one another. The hydraulic actuator 29 is pivotally secured to the intersection 33 of the two limb portions. The distal end 34 of one limb portion 31 is pivotally secured to the side of the frame and the distal end 35 of the other portion 32 carries the bar 28 to which the lower ends of the straps are secured. It will thus be appreciated that actuation of the hydraulic cylinder 29 to increase the length of the actuation arm from the position shown in full line in Figure 3 results in the L shaped arm pivoting in an anti-clockwise direction about the axis point 34" on the frame such that the distal end 35 of the other arm moves to lie close to the other side 15 of the frame.

Tilting movement of the enclosure11 relative to the trailer 12 is controlled by means of an hydraulic cylinder 40 and an actuation arm 41 that extends between an upper pivot point 42 on the side 15 of the enclosure and a position 43 on the trailer remote from that side of the trailer which lies closest to the enclosure. Additionally, two pivot arms 45 are provided between pivot points 44 at that side region of the trailer nearest the enclosure 11 and a mid-height position of the enclosure to which they are non-pivotally secured. Accordingly, when the hydraulic cylinder 40 is actuated to reduce the effective length of the actuation arm 41 from that shown in Figure 1, the arms 45 are caused to pivot in a clockwise direction as viewed in Figure 3 about the lower pivot point 44 such that the enclosure 11 is then elevated and simultaneously tilted. The trailer 12 may be provided with a vertical member 47 which extends above the height of the main trailer surface to act as a stop to prevent further tilting movement when the enclosure has moved to a substantially horizontal position.

Operation of the aforedescribed hydraulic cylinders 25, 29, 40 is achieved by conventional hydraulic hoses, not shown for convenience, and which communicate with a hydraulic fluid manifold assembly 50 mounted on the trailer. That manifold assembly is contained in a cabinet which also incorporates a hydraulic fluid pump 51 powered by an electrical supply derived from a towing vehicle. The cabinet also comprises a sensor 52 adapted to receive infrared signals from a remote hand held control unit 53. The hand held control unit comprises channel selector pads 54 for selecting a particular hydraulic cylinder for operation, and movement control pads 55 to cause that selected hydraulic cylinder to extend or contract in length.

The hydraulic controls cabinet also incorporates electronic interlock means to ensure that the cylinder 29 operating the support belts 26 cannot be actuated if the doors 23 are open, and also to ensure that the doors cannot be opened until the head restraint 34 is in the open position. Additionally the interlock ensures that the cylinders controlling operation of the doors, support belts and head restraint can operate only when the cylinder 40 controlling orientation of the enclosure has put the enclosure in a vertical position.

Although not illustrated, the enclosure additionally comprises conventional limb restrainers to enable the limbs of an animal to be temporarily secured to the enclosure.

## Claims

1. An animal restraining device 10 comprising an enclosure 11 for receiving an animal, said enclosure comprising a substantially rigid frame 13 comprising a pair of ends at least one of which comprises a closure member 23 moveable between open and closed positions thereby respectively to allow an animal to enter the enclosure and to be restrained from exiting from the enclosure, and at least one end comprising a head restraint 24 moveable between a first position at which it defines an opening which is sufficient to allow the head of an animal to pass therethrough and a second position at which it defines a smaller opening through which the neck but not the head of that animal may extend, the enclosure further comprising animal support means 26 operable to engage with the underside of the animal and support the animal when the enclosure is elevated, said animal restraining device further comprising an enclosure support 12 for supporting the enclosure 11 and the enclosure being mounted in a manner in which it is tiltable relative to the enclosure support 12 for movement of the enclosure from a substantially vertical position to an inclined or horizontal position, **characterised in that** the animal restraining device 10 further comprises hydraulic actuators 25,29,37,41 for controlling said tilting movement and operation of at least one of the head restraint 24, closure member 23 and support means 26, an hydraulic fluid manifold assembly 50 having associated therewith an input 52 for receiving control signals to control operation of the manifold assembly, and the animal restraining device further comprising a remote control unit 53 operable at a position remote from the manifold assembly to control operation of at least one of said hydraulic actuators.

2. An animal restraining device according to claim 1, **characterised in that** the enclosure support 12 is a transporter on which the enclosure 11 may be transported for use at different locations and the enclosure 11 is pivotally secured 44 to the transporter.

3. An animal restraining device according to claim 1 or claim 2, **characterised in that** one or each of said hydraulic manifold assembly 50 and an hydraulic pump 51 is located on the enclosure support 12.

4. An animal restraining device according to any one of the preceding claims, **characterised in that** two closure members 23 are provided and located respectively at end regions of the enclosure, at least one of said closure members being moveable by hydraulically controlled means 37 between open and closed positions and at least one of said closure members having a said head restraint 24 associated therewith, and wherein hydraulically controlled operation of the head restraint 24 to move it to an open position is substantially simultaneous with release of a locking device 22 provided to enable the closure member to be retained in a closed position.

5. An animal restraining device according to one of the preceding claims, **characterised in that** the remote control unit 53 is a portable hand-held control unit.

6. An animal restraining device according to claim 5, **characterised in that** the hand control unit comprises channel selector pads 54 for selecting a particular hydraulic actuator for operation, and movement control pads 55 to cause that selected hydraulic actuator to extend or contract in length.

7. An animal restraining device according to any one of the preceding claims, **characterised in that** the remote control unit 53 communicates with the input of the hydraulic fluid manifold assembly 50 by means of a wireless type communication.

8. An animal restraining device according to claim 7, **characterised in that** said wireless type communication comprises one of an infra-red, ultra sonic and radio frequency link.

9. An animal restraining device according to any one of the preceding claims, **characterised in that** an inter-lock device is provided for the purpose of at least one of (a) preventing movement of the support means 26 to a support position unless the or each closure member 23 is in a closed position or until the head restraint 24 is in a head restraining position, (b) inhibiting operation of a closure member 23 to an open position until the support means 26 has been moved to a retracted position at which it does not support the animal, (c) inhibiting operation of a closure member 23 to an open position until the head restraint 24 is in an open position to allow the head of the animal to move freely therethrough, or (d) inhibiting tilting movement of the enclosure 11 relative to a transporter 12 from an initial, upright position until at least a support means is in a supporting position.

10. An animal restraining device according to claim 9, **characterised in that** said inter-lock device comprises an electronic interlock means via which operation of the hydraulic manifold assembly 50 is controlled.
